Europäisches Patentamt

European Patent Office

Office européen des brevets

(19)

(11) Publication number: **0 048 139**
**A1**

(12) **EUROPEAN PATENT APPLICATION**

(21) Application number: **81304165.4**

(22) Date of filing: **11.09.81**

(51) Int. Cl.³: **F 25 B 15/02**
**F 04 B 9/10, F 01 C 13/04**

(30) Priority: **16.09.80 GB 8029888**

(43) Date of publication of application:
**24.03.82 Bulletin 82/12**

(84) Designated Contracting States:
**AT BE CH DE FR IT LI LU NL SE**

(71) Applicant: **The Calor Group Limited**
**14, Moorfields Highwalk**
**London EC2Y9BS(GB)**

(72) Inventor: **Fitt, Peter William**
**9, Tarrett Road**
**Yeovil Somerset, BA20 2LJ(GB)**

(74) Representative: **Newstead, Michael John et al,**
**Haseltine Lake & Co. 28 Southampton Buildings**
**Chancery Lane**
**London, WC2A 1AT(GB)**

(54) Pumping arrangements.

(57) In a system using an absorption refrigeration cycle, there are an absorber (1) for absorbing a gas in a liquid; a pumping arrangement (9, 10, 11, 12, 13, 14, 15, 16, 17, 18, 19), for increasing the pressure of the liquid with the gas dissolved in it and supplying it to a generator (4) where such gas is driven off under high pressure; a return path for liquid from the generator to the absorber; a condenser (15) for gas under high pressure from the generator; an expansion path between the condenser and an evaporator (2) for liquefied gas from the condenser; and a path between the evaporator and the absorber for supplying the gas to the absorber. The pumping arrangement is adapted for using power available from a drop in pressure of the liquid between the generator and the absorber to assist in pumping the liquid with the gas dissolved in it. Additionally or alternatively, the pumping arrangement is adapted for using power available from the drop in pressure between the condenser and the evaporator to assist in pumping the liquid with the gas dissolved in it.

In one example, the pumping arrangement comprises: a cylinder (9) having a chamber; partition means (10) in the chamber for reciprocating therein; on one side of the partition means, a first inlet duct (12), including a valve (13) which may be opened and closed, and a first outlet duct (14), including a valve (15) which may be opened and closed; and, on the other side of the partition means, a second inlet duct (16), including a valve (17) which only allows flow in one direction, and a second outlet duct (18), including a valve (19) which only allows flow in the said one direction. For the pumping arrangement to use the power available from a drop in pressure of the liquid between the generator and the absorber to assist in pumping the liquid with the gas dissolved in it, the first inlet duct is connected in the return path with an output of the generator, the first outlet duct is connected in the return path with an input of the absorber, the second inlet duct is connected with an output of the absorber and the second outlet duct is connected with an input of the generator.

FIG. 2.

Croydon Printing Company Ltd.

-1-

## PUMPING ARRANGEMENTS

This invention relates to pumping arrangements.

According to this invention there is provided, in a system where, in operation, a liquid is pumped from a first pressure to a higher pressure and, elsewhere in the system, there is a pressure drop of a liquid, a pumping arrangement adapted for using power available from the said pressure drop to assist in the pumping from the said first to the said higher pressure.

The system could be such that, in operation, a liquid is pumped from a first pressure to a higher pressure and, elsewhere in the system, the said pressure drop is a pressure drop which results in the partial vaporisation of the liquid, the pumping arrangement being adapted for using power available from the said pressure drop, and the resultant expansion of the fluid, to assist in the pumping of the liquid from the said first to the said higher pressure.

The system could be one using an absorption refrigeration cycle, there being in the system an absorber for absorbing a gas in a liquid; the said pumping arrangement, for increasing the pressure of the liquid with the gas dissolved in it and supplying it to a generator where, in operation, such gas is driven off under high pressure; a return path for liquid from the generator to the absorber; a condenser for gas under high pressure from the generator; an expansion path between the condenser and an evaporator for liquefied gas from the condenser; and a path between the evaporator and the absorber for supplying the gas to the absorber. The said pumping arrangement could be adapted for using power available from a drop in pressure of the liquid between the generator and the absorber to assist in pumping the liquid with the gas dissolved in it. Additionally or alternatively, the said pumping arrangement could be adapted for using power available from the drop in pressure between the condenser and the evaporator to assist in pumping the liquid with the gas dissolved in it.

The said pumping arrangement could comprise: a chamber; partition means in the chamber for reciprocating therein; on one side of the partition means, a first inlet duct, including a valve which may be opened and closed, and a first outlet duct, including a valve which may be opened and closed; and, on the other side of the partition means, a second inlet duct, including a valve which only allows flow in one direction, and a second outlet duct, including a valve which only allows flow in the said one direction.

The said pumping arrangement could comprise: a chamber; partition means in the chamber for reciprocating therein; on one side of the partition means a first inlet duct, including a valve which may be opened and closed, and a first outlet duct, including a valve which may be opened and closed;

on the other side of the partition means a second inlet duct, including a valve which only allows flow in one direction, and a second outlet duct, including a valve which only allows flow in the said one direction; a further chamber; second partition means in the further chamber for reciprocating therein; on one side of the further partition means a third inlet duct, including a valve which may be opened and closed, and a third outlet duct, including a valve which may be opened and closed; on the other side of the further partition means a duct which connects with a source of substantially constant pressure; and connecting means between the first partition means and the further partition means so that power available from the latter means may be applied preferentially in operating the former.

The said pumping arrangement could moreover comprise: first and second chambers; in the first chamber, first and second interlocking gear wheels for rotating in response to the flow of liquid from a first inlet duct to a first outlet duct; in the second chamber, third and fourth interlocking gear wheels, for rotating so that flow of liquid is directed from a second inlet duct to a second outlet duct; and connection means linking at least one gear wheel in the second chamber to one of the gear wheels in the first chamber.

In one case, where the system is one using an absorption refrigeration cycle, the pumping arrangement could use the power available from a drop in pressure of the liquid between the generator and the absorber to assist in pumping the liquid with the gas dissolved in it, the first inlet duct being connected in the return path with an output of the generator, the first outlet duct being connected in the return path with an input of the absorber, the second inlet duct being connected with an output of the absorber and the second outlet duct being connected with an input of the generator. Additionally or alternatively, the pumping arrangement could use the power available from a drop in pressure between the condenser and the evaporator to assist in pumping the liquid with the gas dissolved in it. Thus, where the pumping arrangement is one which has first and further chambers and first and further partition means, the third inlet duct could be connected in the expansion path with an output of the condenser, the third outlet duct is being connected in the expansion path with an input of the evaporator, the first inlet duct being connected in the return path with an output of the generator, the first outlet duct being connected in the return path with an input of the absorber, the second inlet duct being connected with an output of the absorber and the second outlet duct being connected with an input of the generator.

This invention will now be described, by way of example, with reference to the accompanying drawings, in which:

Figure 1 is a schematic diagram of a conventional absorption refrigeration system;

Figure 2 shows a pumping arrangement according to one example of the invention;

Figure 3 shows a pumping arrangement according to a second example of the invention;

Figures 3a and 3b show different conditions of this arrangement;

Figure 4 shows a pumping arrangement according to a third example of the invention;

Figure 5 shows a pumping arrangement according to a fourth example of the invention; and

Figure 6 shows the interior of a pumping arrangement according to a fifth example of the invention.

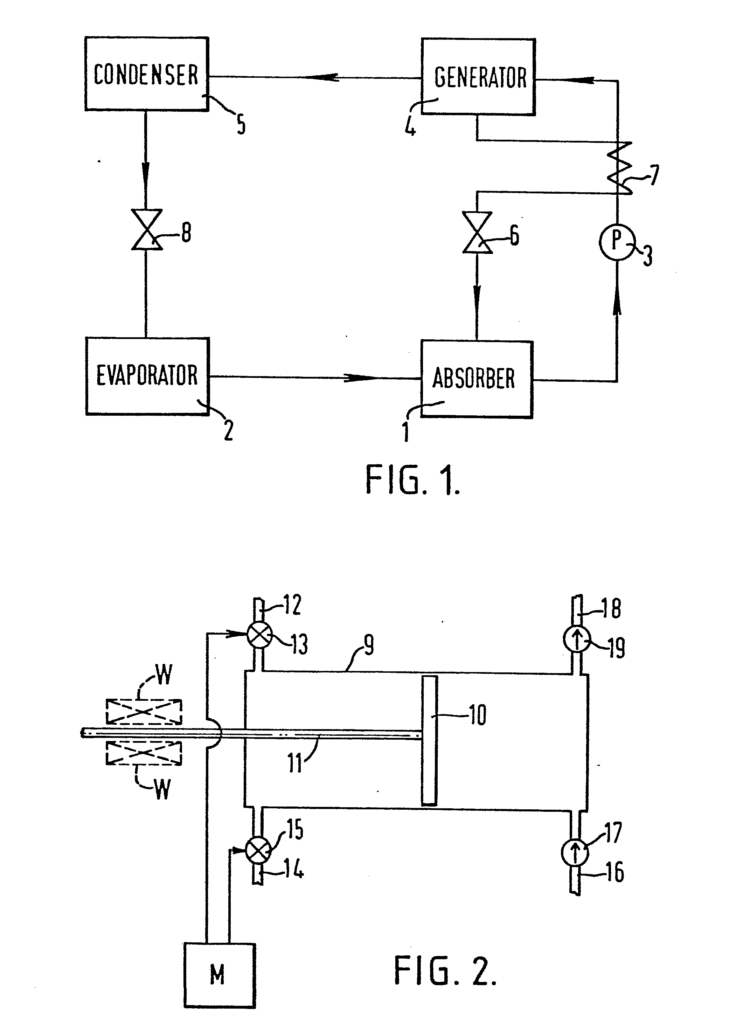

Referring first to Figure 1, a conventional absorption refrigeration system includes an absorber 1 for absorbing ammonia gas from an evaporator 2 in water, the water with the ammonia absorbed in it being pumped by a pump 3 to a higher pressure and into a generator 4 where the water with the ammonia absorbed in it (the "strong" solution) is heated to drive off ammonia under high pressure to a condenser 5, the water (or a "weak" solution) at high pressure passing to a pressure dropping valve 6 via a heat exchanger 7 for preheating the water with the ammonia absorbed in it. Water from the valve 6 is returned to the absorber 1. Liquefied ammonia under high pressure from the condenser 5 passes through an expansion valve 8 to the evaporator 2, from where, now in gaseous form again, it is returned to the absorber 1. Absorption of heat by the evaporator 2 may be used for cooling purposes and/or heat given off from the condenser 5 and absorber 1 may be used for heating purposes.

There will now be described a pumping arrangement for replacing the valve 6 and the pump 3 and using power available as a result of the flow and drop in pressure of the water between the generator 4 and the absorber 1 to assist in pumping the strong solution from the absorber 1 to the generator 4.

Referring to Figure 2, the pumping arrangement comprises a cylinder 9 whose chamber is subdivided by a piston 10 having a piston rod 11, there being means for reciprocating the piston 10 in the cylinder 9. Such means could, for example, comprise a solenoid arrangement including the piston rod 11, for driving it. In Figure 2, by way of example, the winding W of such a solenoid arrangement is indicated in broken lines. On the left-hand side of the piston 10 in the Figure, there is an inlet duct 12 from the heat exchanger 7, the inlet duct 12 including a valve 13 which can be opened and closed; and an outlet duct 14 leading to the absorber 1, the duct 14 including a valve 15 which can be opened and closed. On the right-hand side of the piston 10 in the Figure, there is an inlet duct 16 from the absorber 1, the duct 16 including a non-return valve 17 which allows flow only in a direction from the absorber 1 to the generator 4; and an outlet duct 18 leading to the generator 4, the duct 18 including a non-return valve 19 which also only allows flow in a direction from the absorber 1 to the generator 4. Means M are provided for opening and closing the valves 13 and 15 in a sequence dependent on the reciprocation of the piston 10 and operation of the pumping arrangement is as follows.

Assume that the piston 10 is at its extreme left-hand position, just to the right of the ducts 12 and 14, and valve 15 is open and valve 13 is closed. There is then low pressure on both sides of the piston 10.  Valve 15 is closed and valve 13 opened, so that high pressure builds up on the left-hand side of the piston 10 to a value substantially equal to that on the right-hand side of the piston.  The piston 10 is then moved from the left to the right and, because pressures on both sides of it are substantially equal, the only work necessary is substantially that necessary to overcome friction.  A volume of water with ammonia absorbed in it (i.e. the strong solution) is thereby delivered through valve 19 to the generator 4, an equal volume of water at high pressure passing through the valve 13 from the generator 4 to the left-hand side of piston 10.  Valve 13 is then closed and valve 15 opened.  The pressure at the left-hand side of the piston 10 drops and the pressure at the right-hand side of the piston 10 follows so that there are substantially equal low pressures on both sides of the piston 10.  The piston 10 is then moved from the right to the left, so that water under low pressure is passed through the valve 15 to the absorber 1 and an equal volume of water with ammonia absorbed in it is drawn through valve 17 to the right-hand side of the piston 10 so that the original conditions are restored when the piston 10 stops at its extreme left-hand position.  Again, because the pressures on both sides of the piston 10 are substantially equal, the only work necessary to displace the piston 10 is substantially that necessary to overcome friction.

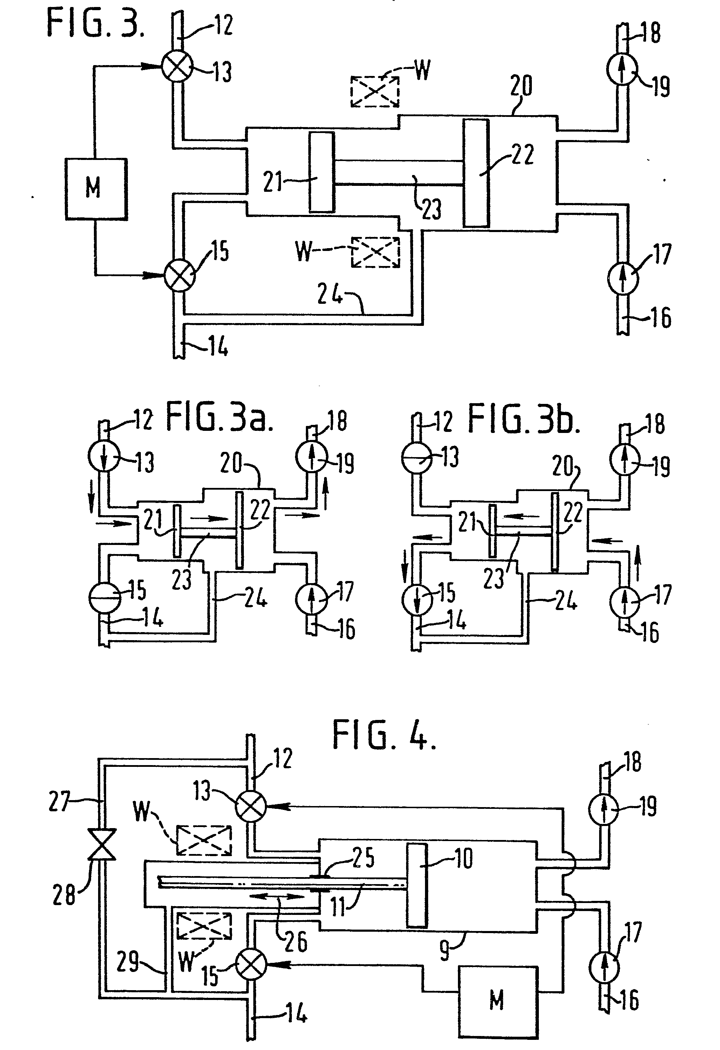

The foregoing assumes that, during each stroke of the piston, 10 the volume displaced through the valve 19 or 17 is equal to the volume displaced through the valve 13 or 14.  However, if these volumes are not equal (and, in general, they will differ) then a second embodiment of pumping arrangement can be used, as shown in Figure 3, in which the same reference numerals have been used for items which are the same as corresponding items in Figure 2. In this embodiment (where it is assumed that the volume displaced through the valve 19 or 17 will be greater than the volume displaced through the valve 13 or 15) the cylinder 9 is replaced by double cylinder 20 having a chamber with two portions of different diameter, the piston 10 and piston rod 11 are replaced by first and second pistons 21 and 22 of different diameters joined by a rod 23 and there is a duct 24 joining duct 14 with the region between the pistons 21 and 22. In this embodiment, the ratio of the areas of the faces of the pistons 21 and 22 corresponds with the ratio of the respective volumes pumped, the bulk of the pressure forces being balanced. For reciprocation of the rod 23 and the pistons 21 and 22, the rod 23 could be such that it is part of a solenoid arrangement, again a winding W of such an arrangement being indicated by broken lines. Figure 3a shows conditions when the rod 23 is being moved from left to right and Figure 3b shows conditions when the rod 23 is being moved from right to left.

Figure 4 shows another embodiment, which is a modification of the Figure 2 embodiment to provide different displacement volumes, the same reference numerals being used for items which correspond with items in Figure 2. The piston rod 11 extends through a seal 25 into a chamber 26 and ducts 12 and 14 are bridged by a duct 27 in which there is an adjustable by-pass valve 28, the duct 27 communicating with the chamber 26 via a duct 29. Again the piston 10 could be reciprocated by the piston rod 11 being part of a solenoid arrangement whose winding W is indicated by broken lines. The by-pass valve 28 of this embodiment, equally applicable to the Figure 3 embodiment , ensures that the total flow passing from the generator

to the absorber is correctly matched to the flow passing from the absorber to the generator.

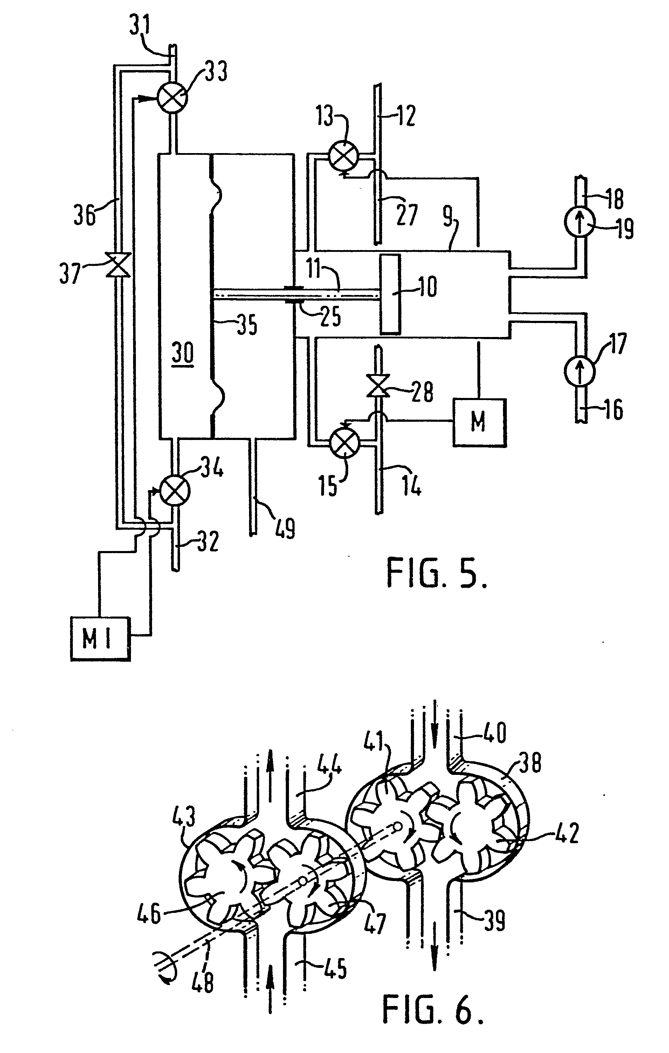

Figure 5 shows a modification of the Figure 4 embodiment, the same reference numerals being used for items which correspond with items in Figure 4. The power available as liquefied ammonia from the condenser is dropped in pressure before being supplied to the evaporator is used for reciprocating the piston 11. Instead of the expansion valve 8, there is a chamber 30, an inlet duct 31 of which communicates with the condenser and an outlet duct 32 of which communicates with the evaporator. In the duct 31, there is a valve 33 which can be opened and closed and, in the duct 32, there is a valve 34 which can be opened and closed. The piston rod 11 is connected to a resiliently mounted member 35 in the chamber 30 and a duct 36 bridges the valves 33 and 34 and the chamber 30, there being an adjustable by-pass valve 37 in the duct 36. Means M1 are provided for opening and closing the valves 33 and 34 in an appropriate sequence and the valves 28 and 37 are adjusted to give a degree of throttling such that the flow is balanced in the three fluid paths. The chamber on the right-hand side of the member 35 communicates via duct 49 with a source of substantially constant pressure, for example communicating with duct 14.

Referring now to Figure 6, a further form of pumping arrangement for replacing the pump 3 and using the flow and pressure drop of water from the generator 4 to the absorber 1 to assist in pumping the strong solution from the absorber to the generator comprises: a chamber 43 having an inlet duct 45 which is connected with an output of the absorber and an outlet duct 44 which is connected with an input of the generator; a pair of interlocking

gear wheels 46 and 47 in the chamber 43; a chamber 38 having an inlet duct 40 which is connected with an output of the generator for the water therefrom at high pressure and an outlet duct 39 connected with an input of the absorber for the water; a pair of interlocking gear wheels 41 and 42 in the chamber 38; and a connection 48 whereby rotation of the gear wheel 41 as a result of the flow and pressure drop of water from the generator causes rotation of the gear wheel 47 and thereby rotation of the gear wheel 46 and pumping of the strong solution.

CLAIMS

1. A system where, in operation, a liquid is pumped from a first pressure to a higher pressure and, elsewhere in the system, there is a pressure drop of a liquid, the system including a pumping arrangement adapted for using power available from the said pressure drop to assist in the pumping from the said first to the said higher pressure.

2. A system according to claim 1, which is such that, in operation, a liquid is pumped from a first pressure to a higher pressure and, elsewhere in the system, the said pressure drop is a pressure drop which results in the partial vaporisation of the liquid, wherein the pumping arrangement is adapted for using power available from the said pressure drop, and the resultant expansion of the fluid, to assist in the pumping of the liquid from the said first to the said higher pressure.

3. A system according to claim 1 or 2, which is one using an absorption refrigeration cycle, there being in the system an absorber for absorbing a gas in a liquid; the said pumping arrangement for increasing the pressure of the liquid with the gas dissolved in it and supplying it to a generator where, in operation, such gas is driven off under high pressure; a return path for liquid from the generator to the absorber; a condenser for gas under high pressure from the generator; an expansion path between the condenser and an evaporator for liquefied gas from the condenser; and a path between the evaporator and the absorber for supplying the gas to the absorber.

4. A system according to claim 3, wherein the said pumping arrangement is adapted for using power available from a drop in pressure of the liquid between the generator and the absorber to assist in pumping the liquid with the gas dissolved in it.

5. A system according to claim 3 or 4, wherein the said pumping arrangment is adapted for using power available from the drop in pressure between the condenser and the evaporator to assist in pumping the liquid with the gas dissolved in it.

6. A system according to any preceding claim, wherein the said pumping arrangement comprises: a chamber; a partition means in the chamber for reciprocating therein; on one side of the partition means, a first inlet duct, including a valve which may be opened and closed, and a first outlet duct, including a valve which may be opened and closed; and, on the other side of the partition means, a second inlet duct, including a valve which only allows flow in one direction, and a second outlet duct, including a valve which only allows flow in the said one direction.

7. A system according to any of claims 1 to 5, wherein the said pumping arrangement comprises: a chamber; partition means in the chamber for reciprocating therein; on one side of the partition means a first inlet duct, including a valve which may be opened and closed, and a first outlet duct, including a valve which may be opened and closed; on the other side of the partition means a second inlet duct, including a valve which only allows flow in one direction, and a second outlet duct, including a valve which only allows flow in the said one direction; a further chamber; second partition means in the further chamber for reciprocating therein; on one side of the further partition means a third inlet duct, including a valve which may be opened and closed, and a third outlet duct, including a valve which may be opened and closed; on the other side of the further partition means a duct which connects with a source of substantially constant pressure; and connecting means between the first partition means and the further partition means so that power available from the latter means may be applied preferentially in operating the former.

8. A system according to any of claims 1 to 5, wherein the said pumping arrangement comprises: first and second chambers; in the first chamber, first and second interlocking gear wheels for rotating in response to the flow of liquid from a first inlet duct to a first outlet duct; in the second chamber, third and fourth interlocking gear wheels, for rotating so that flow of liquid is directed from a second inlet duct to a second outlet duct; and connection means linking at least one gear wheel in the second chamber to one of the gear wheels in the first chamber.

9. A system according to claim 4 and any of claims 6 to 8 as dependent upon claim 4, wherein the first inlet duct is connected in the return path with an output of the generator, the first outlet duct being connected in the return path with an input of the absorber, the second inlet duct being connected with an output of the absorber and the second outlet duct being connected with an input of the generator.

10. A system according to claims 5 and 7, wherein the third inlet duct is connected in the expansion path with an output of the condenser and the third outlet duct is connected in the expansion path with an input of the evaporator, the first inlet duct being connected in the return path with an output of the generator, the first outlet duct being connected in the return path with an input of the absorber, the second inlet duct being connected with an output of the absorber and the second outlet duct being connected with an input of the generator.

0048139

1 / 3

FIG. 1.

FIG. 2.

FIG. 3.

FIG. 3a.

FIG. 3b.

FIG. 4.

FIG. 5.

FIG. 6.

# EUROPEAN SEARCH REPORT

**European Patent Office**

Application number

EP 81 30 4165

| | DOCUMENTS CONSIDERED TO BE RELEVANT | | CLASSIFICATION OF THE APPLICATION (Int.Cl. 3) |
|---|---|---|---|
| Category | Citation of document with indication, where appropriate, of relevant passages | Relevant to claim | |
| X | <u>US - A - 1 866 825</u> (SMITH)<br>* Page 2, line 8 - page 3, line 114; figures 1-4 *<br><br>-- | 1-4,8,9 | F 25 B 15/02<br>F 04 B 9/10<br>F 01 C 13/04 |
| X | <u>US - A - 3 369 373</u> (MERRICK)<br>* Column 2, line 47 - column 6, line 10; figures *<br><br>-- | 1,3,4,6,9 | |
| X | <u>US - A - 3 293 881</u> (WALKER)<br>* Column 1, line 72 - column 4, line 59; figures 1,2 *<br><br>-- | 1,3,4,6,7,9 | **TECHNICAL FIELDS SEARCHED (Int.Cl. 3)** |
| X | <u>US - A - 3 046 756</u> (WHITLOW)<br>* Column 2, line 3 - column 5, line 13; figures 1,2 *<br><br>-- | 1,3-7,9,10 | F 25 B<br>F 04 B<br>F 01 C<br>F 04 C |
| | <u>US - A - 1 989 520</u> (MAIURI)<br>* Page 1, right-hand column, line 3 - page 2, right-hand column, line 17; figures 1,2 *<br><br>-- | 1,3,6 | |
| | <u>US - A - 2 408 802</u> (MILLER)<br>* Column 5, line 20 - column 6, line 37; figure 1 *<br><br>-- | 1,3 | **CATEGORY OF CITED DOCUMENTS** |
| | <u>DE - C - 840 249</u> (WUSSOW)<br>* Page 2, line 15 - page 4, line 117; figures 1-4 *<br><br>-- ./. | 1,3 | X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons<br><br>&: member of the same patent family, corresponding document |

The present search report has been drawn up for all claims

| Place of search | Date of completion of the search | Examiner |
|---|---|---|
| The Hague | 23-12-1981 | BOETS |

EPO Form 1503.1 06.78

European Patent
Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 400 555 (GRANRYD)  \* Column 1, line 66 - column 3, line 8; figures 1,2 \*  -- | 2 | |
| A | FR - A - 986 035 (EXPLOITATION MECANIQUE CELER) | | |
| A | US - A - 1 428 958 (HAPGOOD) | | |
| A | US - A - 2 253 893 (CLAYTON) | | TECHNICAL FIELDS SEARCHED (Int. Cl.³) |
| A | US - A - 2 929 222 (LANG) | | |
| A | US - A - 2 930 204 (LANG) | | |
| A | US - A - 2 737 031 (WULLE)  ---- | | |

EPO Form 1503.2   06.78